# EUROPEAN PATENT APPLICATION

(11) **EP 0 779 529 A2**
(43) Date of publication of application: **18.06.1997**
(21) Application number: 96108701.2
(22) Date of filing: 31.05.1996
(51) Int. Cl.: G02B 21/22

(54) **Stereoscopic microscope with a convergent optics with a slot lamp for video recording**

(30) Priority: 12.12.1995 IT BO950577
(71) Applicant: C.S.O. SRL, 50010 Badia a Settimo, Florence (IT)
(72) Inventor: Mura, Sergio, 50018 Scandicci, (Florence) (IT)
(74) Representative: Sassatelli, Franco T., Dr.

(57) **Abstract**

The stereoscopic microscope makes use of a couple of lenses (1) with magnification 16x and of another couple of lenses (2) with magnification 10x. Both the said couples of lenses are supported into a disk-shaped drum (3) to be rotated of 90° by means of a draw lever (4) to place the said couples of lenses in such a position that they can be used by the operator for the direct observation of the image of the patient's eye structure and for the operating function of a video recording camera (5). The optical scheme makes use in one direction of a right-angle prism (6) for deviating on lenses (7) and in the opposite direction of a right-angle prism (8) for deviating towards the video camera (5). Moreover, two reflecting prisms (9) are featured on the observation axis A and B and on the ocular groups (10). From the observation position through the ocular groups (10) the operator sees the image reproduces by the first lenses (1) in presence of a magnification 16x or by the other lenses (2) in presence of a magnification 10x with rectified images in both cases by reflecting prisms (9). Then, for the transmission of the images on axis C of the video camera (5) is utilized the axis of the couple of lenses (1 or 2) not used for the direct observation of the image.

## Description

The present invention refers to a stereoscopic microscope with a convergent optics for the diagnosis of certain pathologies of the eye through a biomicroscopic examination, making use of the Tyndall effect, by the transmission on a monitor of a much larger light image which, from direct observation, solves the problem of the image loss of light due to the taking away caused by the presence of a connection device for the video recording with no direct intervention on the optic observation axis. The current technologies allow biomicroscopic examinations with the physician's direct vision of the eye structures and a deep light image much enlarged made possible by the use of a device - called "slot lamp" - which gives a perception of a blade gap of the light projected with a depth effect on the structures of the eyeball under examination. At present the said image are reproduced by means of Galilean-type microscopes fitted with video recording equipments, which film them for the file to be used by the examinator and also for statistical data. These operative associate sections, however have the drawback that, as the transmission of the images takes place on the same axis, the video recording system absorbs some of the brightness necessary to the operator, who is observing the image directly, according to a value varying from 30% to 50%. For the above stated reasons, therefore, the image formation of the light blade gap which allows a deep bearing of the eye structures, according to the Tyndall effect, is rather difficult and causes eye fatigue to operators. To reduce the said drawback the equipments today in use can dispose of an axial transverse variator on which an enlarging lens can be fixed by means of an optical separator, which conveys the light in such a way that it can be used in part for the direct observation of the image and in part for the video recording. In spite of this, however, some of the light is taken away as all the equiments, from the eye-piece to the output lens, come into the optical way with the well-known consequences.

The present invention solves the above stated problems by means of a stereoscopic microscope with a convergent optics in which the video recording system does not come in directly along the operator's observation optical axis. In particular, the invention consists of a stereoscopic microscope which makes use of a couple of lenses 1 with magnification 16x and of another couple of lenses 2 with magnification 10x. Both the said couples of lenses are supported into a disk-shaped drum 3 which can be rotated of 90° by means of a draw lever 4 to place the said couples of lenses in such a position that they can be used by the operator for the direct observation of the image of the patient's eye structure and without interfering with the full operating function of a video recording camera 5.

The optical scheme makes use in one direction of a right-angle prism 6 for deviating on lenses 7 and in the opposite direction of a right-angle prism 8 for deviating towards the video camera 5. Moreover, two reflecting prisms 9 are featured on the observation axis A and B and on the ocular groups 10. From the observation position through the ocular groups 10 the operator sees the image reproduces by lenses 1, in presence of a magnification 16x, or by lenses 2, in presence of a magnification 10x, with rectified images in both cases by reflecting prisms 9. The axis of the couple of lenses 1 or 2, which is not used for the direct observation of the image, is utilized for the transmission of the images on axis C of the video camera 5.

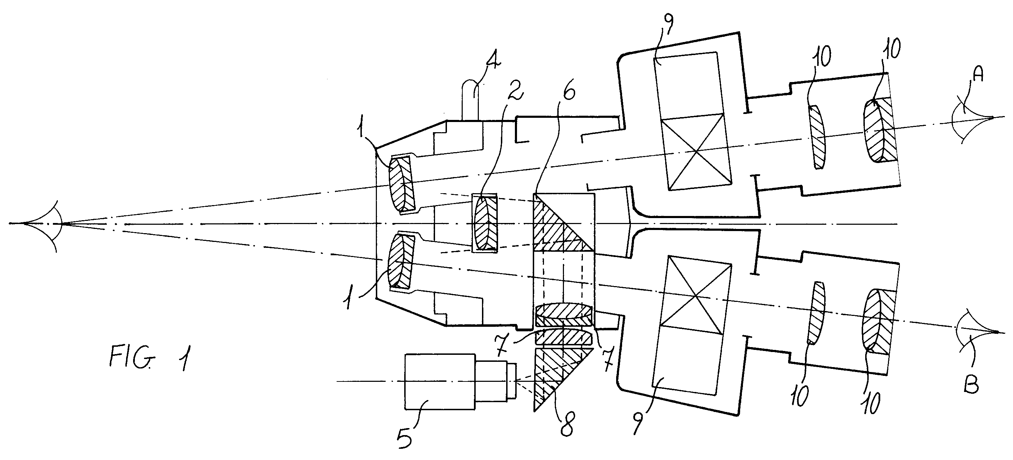

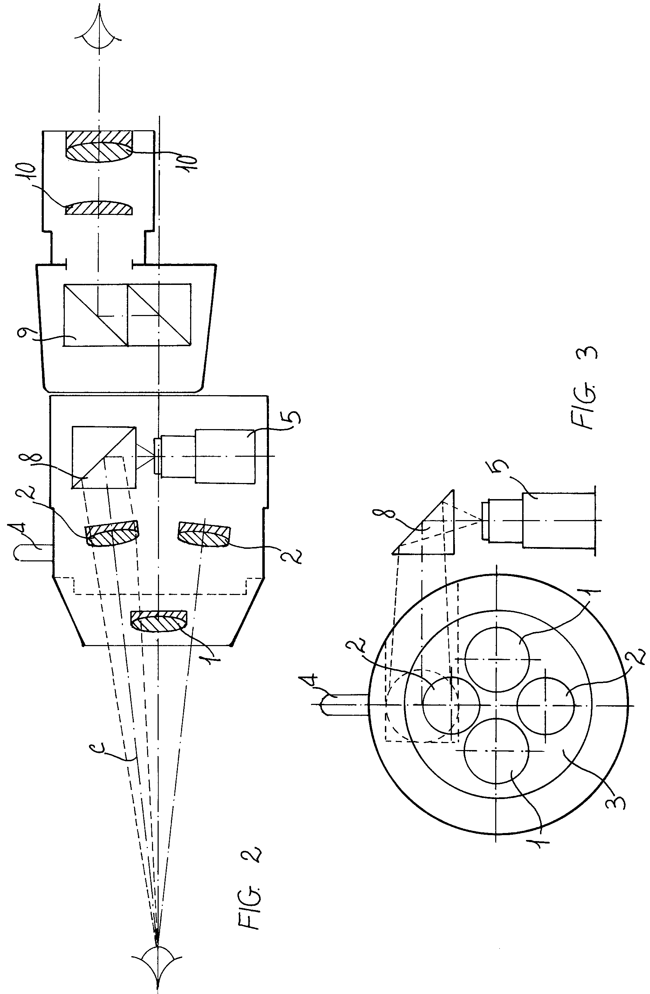

In this way as an interference condition is avoided, the direct observation of the image is made possible for the operator with the complete utilization of the brightness available. As an alternative to the use of the right-angle prisms 6 and 8, it is possible to use mirror deviation systems. Optical schemes explaining the results of the present invention are given only by way of example in the drawings of sheets 1 and 2. In sheet 1 fig. 1 is longitudinal section view of the microscope according to the plane where the observation axes A and B lie. In sheet 2 fig. 2 is longitudinal section view of the same microscope displaced of 90° with respect to the one of fig. 1 on which axis C lies for the transmission of images of the videocamera 5 by means of the deviation right-angle prism 8 for the video recording. Fig. 3 is a view of the microscope from the examination position of the patient's eye. The drum 3 is given equipped with the couples of lenses 1 and 2 which can be used separately both for the observation of the direct image and the video recording.

## Claims

1. Stereoscopic microscope with a convergent optics with a slot lamp for video recording cosists of a couple of lenses (1) with magnification 16x and of another couple of lenses (2) with magnification 10x, in that both said couples of lenses are supported into a disk-shaped drum (3) to be rotated of 90° by means of a draw lever (4) to place the said couples of lenses in such a position to be used by the operator for the direct observation of the image of the patient's eye and for the operating function of a video camera (5); characterized in that:
- the optical scheme makes use in one direction of a right-angle prism (6) for deviating on lenses (7) and in the opposite direction of a right-prism (8) for deviating towards the vide camera (5);
- two reflecting prisms (9) are featured on the observation axis A and B and on the ocular groups (10);
- from the observation position through the ocular groups (10) the operator sees the image reproduces by lenses (1) in presence of a magnification 16x or by other lenses (2) in presence of a magnification 10x with rectified images in both cases by reflecting prisms (9);
- the axis of the couple of lenses (1 or 2) which is not used for the direct observation of the image is utilized for the transmission of the images on axis C of the vide camera (5);
- coming to avoid an interference condition, the direct observation of the image is made possible for the operator with the complete utilization of the brightness available.

2. Stereoscopic microscope with a convergent optics with a slot lamp for video recording, as per claim 1), characterized in that alternatively to the use of the right-angle prisms (6 and 8) mirror deviation systems are to be used.
